(19) **Europäisches Patentamt / European Patent Office / Office européen des brevets**

(11) **EP 4 140 853 A1**

(12) **EUROPEAN PATENT APPLICATION**
published in accordance with Art. 153(4) EPC

(43) Date of publication:
**01.03.2023 Bulletin 2023/09**

(21) Application number: **21791959.6**

(22) Date of filing: **13.04.2021**

(51) International Patent Classification (IPC):
**B61L 25/02** *(2006.01)*     **B61L 27/00** *(2006.01)*
**G09B 9/04** *(2006.01)*     **G09B 19/16** *(2006.01)*
**G09B 29/00** *(2006.01)*     **G09B 29/10** *(2006.01)*

(52) Cooperative Patent Classification (CPC):
**B61L 25/02; B61L 27/00; G09B 9/04; G09B 19/16; G09B 29/00; G09B 29/10**

(86) International application number:
**PCT/JP2021/015268**

(87) International publication number:
**WO 2021/215296 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2020 JP 2020074974**

(71) Applicant: **Hitachi, Ltd.**
**Tokyo 100-8280 (JP)**

(72) Inventors:
- **ODA, Atsushi**
  **Tokyo 100-8280 (JP)**
- **FUKUHARA, Kiyohito**
  **Tokyo 100-8280 (JP)**
- **TOKUYAMA, Kazuo**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **DRIVING ASSISTANCE DEVICE, PROCESSING METHOD FOR DRIVING ASSISTANCE DEVICE, AND PROGRAM**

(57)     An object of the invention is to provide a driving assistance device capable of reflecting review of past driving operations and learning of recommended driving operations in actual driving by a simple method. Therefore, the driving assistance device according to the invention includes a display unit, an operation unit configured to designate an item for specifying an image of a forward scene to be displayed on the display unit, a driving operation recording unit configured to record a driving operation, a map recording unit configured to record a map around a railroad line, a forward scene recording unit configured to record image data of the forward scene and position data at which the forward scene is imaged, and a processing unit. The processing unit includes a first determination unit configured to determine driving data to be displayed on the display unit, a first display control unit configured to display on the display unit a driving operation and a map around a railroad line in the determined driving data, a second determination unit configured to determine a position on the railroad line for specifying the image of the forward scene to be displayed on the display unit, and a second display control unit configured to display on the display unit the image of the forward scene at the determined position on the railroad line.

FIG. 2

## Description

Technical Field

The present invention relates to a driving assistance device, a processing method of a driving assistance device, and a program capable of reviewing past driving operations and learning recommended driving operations.

Background Art

In the related art, driver education concerning driving operations is conducted mostly through verbal instructions by an instructor, and it is difficult for a driver being instructed to fully understand intentions of the instructor. In recent years, attempts are made to utilize objective data for the driver education. PTL 1 discloses a technique of conducting driving training using objective data such as speeds and positions.

Citation List

Patent Literature

PTL 1: JP-A-2000-338861

Summary of Invention

Technical Problem

In the technique described in PTL 1, driving operation results of an instructor and a trainer are compared by a run curve which is time-series data of positions and speeds of a train. However, many drivers do not memorize driving operations of the train in the time series of the positions and the speeds, but use a target object around a railroad line (for example, a railroad crossing, a building along the railroad line) as a clue to understand a switching point of their own driving operations. Therefore, even when training is conducted using a run curve, it is difficult to associate a switching point of the driving operations in the run curve with a corresponding position on an actual route when a train is actually driven, and there is a problem that a result of training is not sufficiently reflected in actual driving.

In order to address the above problem, an object of the invention is to provide a driving assistance device, a processing method of the driving assistance device, and a program capable of reflecting review of past driving operations and learning of recommended driving operations in actual driving by a simple method.

Solution to Problem

In order to solve the above problem, in one representative driving assistance device according to the invention, a processing unit includes a first determination unit configured to determine driving data to be displayed on a display unit, a first display control unit configured to display on the display unit a driving operation and a map around a railroad line in the determined driving data, a second determination unit configured to determine a position on the railroad line for specifying an image of a forward scene to be displayed on the display unit, and a second display control unit configured to display on the display unit the image of the forward scene at the determined position on the railroad line.

Advantageous Effects of Invention

According to the invention, it can be achieved by a simple method to reflect the review of the past driving operations and the learning of the recommended driving operations in the actual driving.

Problems, configurations, and effects other than those described above will be clarified based on descriptions of embodiments as follows.

Brief Description of Drawings

[FIG. 1] FIG. 1 is a diagram illustrating a configuration of a driving assistance device according to an embodiment of the invention.
[FIG. 2] FIG. 2 is a diagram illustrating an example of a display to a user according to the embodiment of the invention.

[FIG. 3] FIG. 3 is a diagram illustrating another example of the display to the user according to the embodiment of the invention.

[FIG. 4] FIG. 4 is a flowchart illustrating processing (an example) according to the embodiment of the invention.

[FIG. 5] FIG. 5 is a flowchart illustrating processing (another example) according to the embodiment of the invention.

[FIG. 6] FIG. 6 is a schematic diagram illustrating a method of setting an offset value (when a camera has a narrow angle) according to the embodiment of the invention.

[FIG. 7] FIG. 7 is a schematic diagram illustrating a method of setting an offset value (when a camera has a wide angle) according to the embodiment of the invention.

[FIG. 8] FIG. 8 is a diagram illustrating an example of a recording format of a forward scene recording unit according to the embodiment of the invention.

Description of Embodiments

Hereinafter, an embodiment will be described with reference to drawings.

[Embodiment]

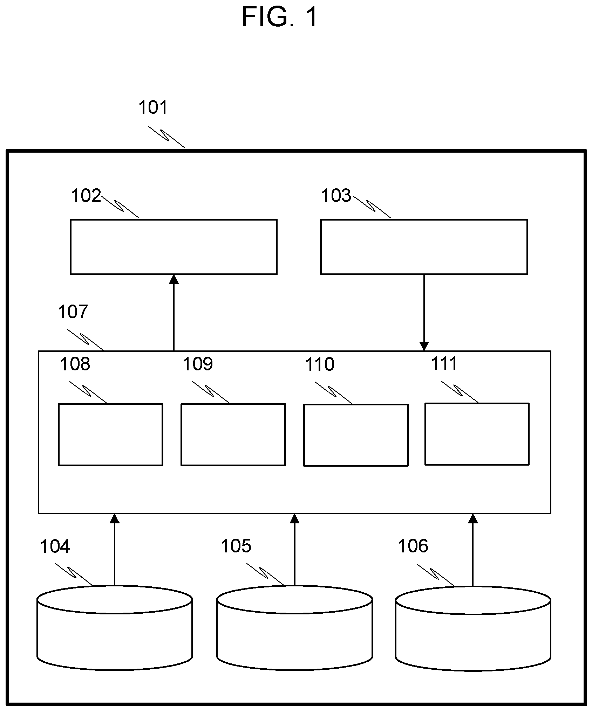

FIG. 1 is a diagram illustrating a configuration of a driving assistance device according to the present embodiment of the invention. A driving assistance device 101 according to the present embodiment includes a display unit 102 that performs display to a user, an operation unit 103 operated by the user, a driving operation recording unit 104 in which recommended driving operations and past driving operations of a driver himself/herself are recorded, a map recording unit 105 in which a map is recorded, a forward scene recording unit 106 in which image data of a forward scene and position data at which the forward scene is imaged are recorded, and a processing unit 107. The processing unit 107 includes a first determination unit 108 that determines driving data to be displayed on the display unit, a first display control unit 109 that displays on the display unit a driving operation and a map around a railroad line based on the determined driving data, a second determination unit 110 that determines a position on the railroad line that specifies an image of a forward scene to be displayed on the display unit, and a second display control unit 111 that displays on the display unit the image of the forward scene at the determined position on the railroad line.

In the present disclosure, "switching the driving operation" means switching among power running, coasting, and braking, and starting and ending a constant-speed operation and a limited-speed operation by operating a driving device. The "driving data" means data of a driving operation performed in one crew duty or data of an ideal driving operation to be performed in one crew duty. The "forward scene" means a scene that the driver visually recognizes in forward in actual driving.

It is assumed that the device is a tablet, and the device may be another device as a matter of course. For example, the device may be a personal computer or an on-vehicle device. As a method for implementing the device, software may be installed in the device, or software placed outside the device as a Web application may be operated by the device without installing the software in the device. In short, as long as an interface for using the device is provided to the user, any device or method implementing the device may be used.

The forward scene recorded by the forward scene recording unit 106 is basically a forward scene imaged in daytime, and may be a forward scene imaged for each of various external conditions such as early morning, nighttime, rain, and fog. By displaying, to the user, the forward scene image imaged under a condition close to the condition of the driving data to be learned by the user, improvement of learning effect is expected.

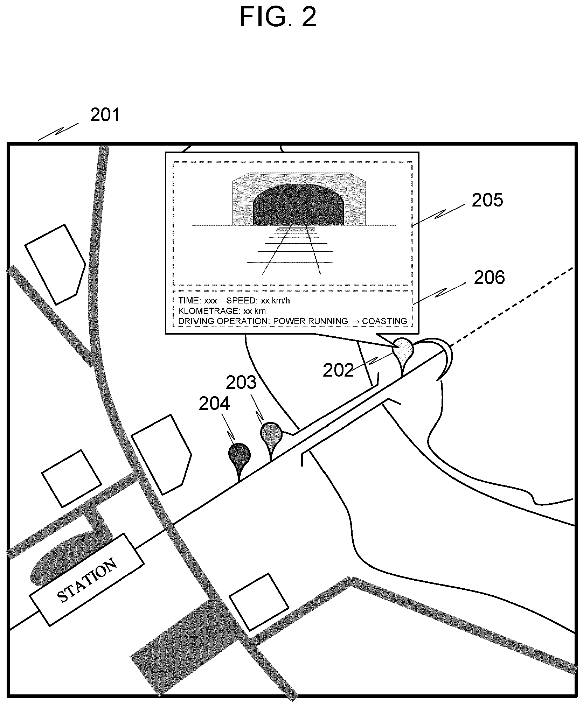

FIG. 2 illustrates an example of the display to the user. In general, since a driver is not familiar with a run curve which is time-series data of positions and speeds of a train, a switching point of the driving operation is displayed as icons 202, 203, and 204 on a map 201. The icons may be displayed together with a value of a notch after switching. When the icons 202, 203, and 204 that are driving operation switching points displayed on the map are tapped, a forward scene 205 of the switching point is displayed. An area 206 for displaying various supplementary information other than the forward scene may be provided. In the display area 206, for example, a time, a position of the switching point (for example, a kilometrage), a speed of the train, and details of the switching driving operation (for example, from the power running to the coasting) are displayed. In the display area 206, the values of the notches before and after switching may be displayed.

The user can display on the map the driving operation of at least one any driving data for which the user wants to check the driving operation. In such a case, it is desirable to change colors of the icons 202, 203, and 204 for each piece of driving data so that the switching point of the driving operation of which driving data can be understood at a glance. In order to be able to identify an icon of each piece of driving data even when icons of a plurality of operation data overlap with each other, a display form of the icon may be changed for each piece of operation data, for example, by changing a size of the icon or blurring the icon. If the driving operation of a learner himself/herself and the driving operation of an instructor or the driving operation that minimizes power consumption are displayed, it is easy to compare the two operations.

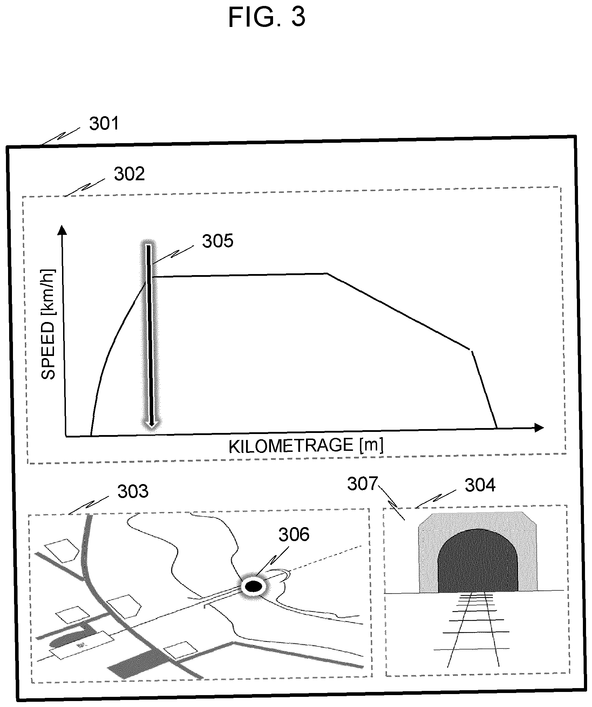

FIG. 3 illustrates another example of the display to the user. FIG. 2 illustrates an example in which only the map is displayed, and FIG. 3 illustrates an example in which an area 302 for displaying a run curve, an area 303 for displaying a map, and an area 304 for displaying a forward scene are provided on a display 301, assuming a user who wants to correspond the switching point of the driving operation to the run curve. When any position on the run curve is designated by a pointer 305, a point 306 corresponding to the position is displayed on the map, and a forward scene 307 corresponding to the position is displayed. In this way, the run curve and the forward scene can be easily corresponded. The icons of the driving operation switching point illustrated in FIG. 2 may be displayed in the run curve display area 302 and the map display area 303. The value of the notch may be displayed together in the run curve display area 302. The power consumption may be displayed together in the display 301.

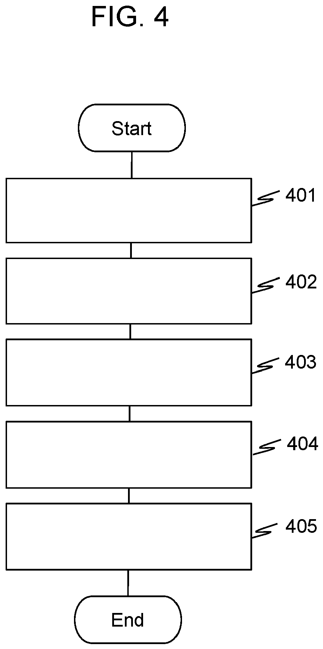

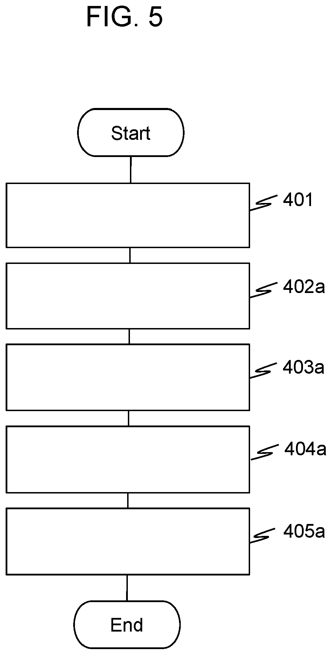

Next, processing of the driving assistance device according to the present embodiment will be described with reference to FIGS. 4 and 5.

FIG. 4 is a flowchart illustrating processing executed by the driving assistance device in the above example (FIG. 2) from when the user designates any driving operation switching point to when a forward scene of the switching point is displayed to the user.

Step 401

The first determination unit 108 determines driving data designated by the user by the operation unit 103 or predetermined driving data as at least one piece of driving data to be displayed. The user may designate the driving data by a date, or by a unique ID associated with an operation such as a train number. In short, as long as the driving data to be displayed can be designated by the operation unit 103, any method may be used. The processing proceeds to step 402.

Step 402

The first display control unit 109 acquires a driving operation of any section in the determined driving data from the driving operation recording unit 104, acquires a map around a railroad line of the same section from the map recording unit 105 in the determined driving data, and displays on the display unit 102 the driving operation switching point as an icon on the map. The processing proceeds to step 403.

Step 403

The second determination unit 110 determines the driving operation switching point designated by the user by the operation unit 103 as a driving operation switching point at which a forward scene is to be displayed. The user designates the driving operation switching point by, for example, tapping an icon of a switching point at which the user desires to check the forward scene among the switching points of the driving operation displayed on the display unit 102. The processing proceeds to step 404.

Step 404

The second display control unit 111 calculates a point moved by an offset value with respect to the determined driving operation switching point. The position of the driving operation switching point may be managed using a kilometrage indicating a distance from a reference point, or may be managed using a latitude and a longitude. In short, as long as the driving operation switching point can be uniquely specified, any method may be used.

The offset value is a distance required to correct a forward scenery image recorded in advance and a field of view of the driver such that the forward scenery image recorded in advance and the field of view of the driver appear similar. An optimal offset value at which the forward scenery image and the field of view of the driver appear similar may be obtained in advance through experiments on the driver, or the offset value may be adjustable such that the user can adjust the offset value while viewing the image such that a desired appearance of the image is obtained.

The second display control unit 111 calculates a kilometrage of the forward scene image to be displayed by adding or subtracting the offset value to or from the kilometrage of the driving operation switching point. Specifically, the calculation is performed using an equation (1) or an equation (2). When the kilometrages are in ascending order in a traveling direction, the equation (1) is used. When the kilometrages are in descending order in the traveling direction, the equation (2) is used. The processing proceeds to step 405.

$$\text{kilometrage of image to be displayed} = \text{kilometrage of}$$

$$\text{driving operation switching point} + \text{offset value} \quad (1)$$

$$\text{kilometrage of image to be displayed} = \text{kilometrage of}$$

$$\text{driving operation switching point} - \text{offset value} \quad (2)$$

Step 405

The second display control unit 111 acquires the forward scene image corresponding to the kilometrage of the forward scene image to be displayed calculated in step 404 from the forward scene recording unit 106, and displays on the display unit 102 the forward scene image.

FIG. 5 is a flowchart illustrating processing executed by the driving assistance device in the above another example (FIG. 3) from when the user designates any position on the run curve to when a forward scene of the switching point is displayed to the user. A first step is the above step 401, and the processing proceeds to step 402a.

Step 402a

The first display control unit 109 acquires a driving operation of any section in the determined driving data from the driving operation recording unit 104, acquires a map around a railroad line of the same section from the map recording unit 105 in the determined driving data, and displays on the display unit 102 the driving operation as a run curve together with the map. The processing proceeds to step 403a.

Step 403a

The second determination unit 110 determines the position on the run curve designated by the user by the operation unit 103 as a position on the run curve where a forward scene is to be displayed. The user designates the position on the run curve by, for example, placing the pointer 305 at a position where the user desires to check the forward scene among the positions on the run curve displayed on the display unit 102. As the pointer 305 moves, the point 306 on the map also moves. The processing proceeds to step 404a.

Step 404a

The second display control unit 111 calculates a position moved by an offset value with respect to the determined position on the run curve.

The second display control unit 111 calculates a kilometrage of the forward scene image to be displayed by adding or subtracting the offset value to or from the kilometrage of the position on the run curve. The processing proceeds to step 405a.

Step 405a

The second display control unit 111 acquires the forward scene image corresponding to the kilometrage of the forward scene image to be displayed calculated in step 404a from the forward scene recording unit 106, and displays on the display unit 102 the forward scene image.

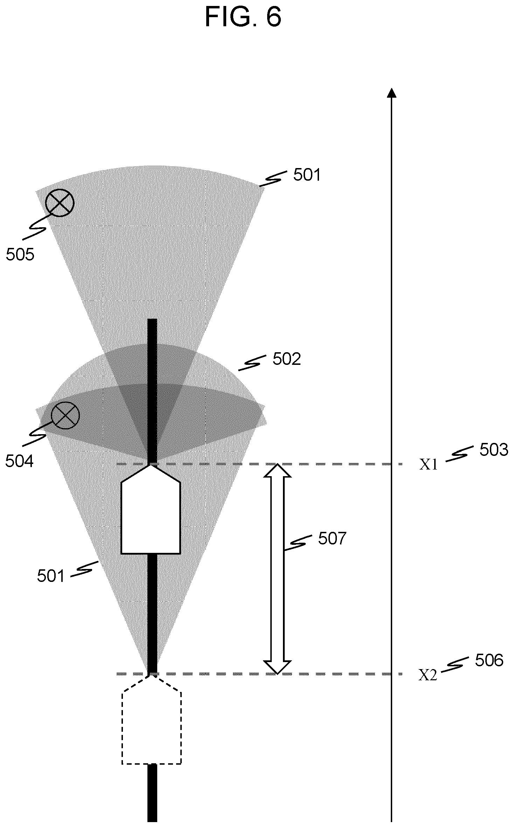

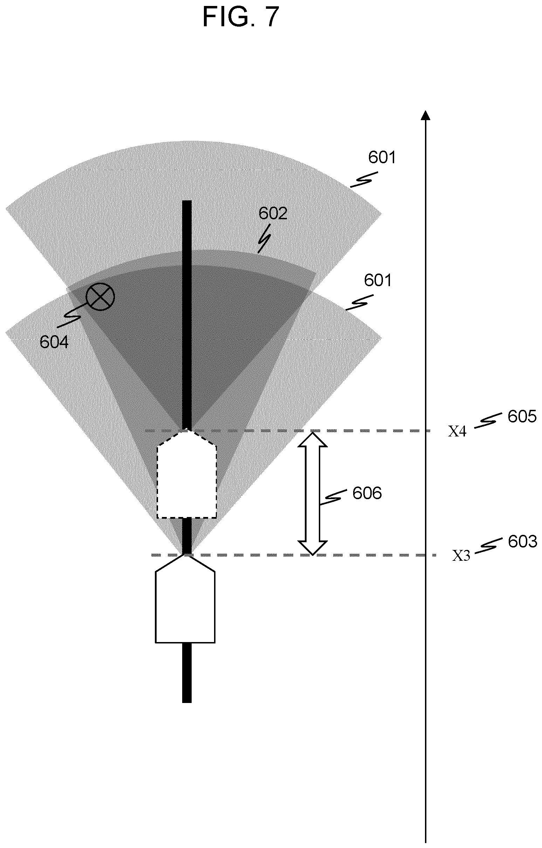

The offset value will be described with reference to FIGS. 6 and 7. The offset value has a positive or negative value, and the positive or negative value changes depending on whether an angle of view of a camera used in recording the forward scene in advance is narrower or wider than a field of view of a human.

FIG. 6 illustrates a case in which an angle of view 501 of a camera used to record a forward scene in advance is narrower than a field of view 502 of a human. At this time, it is assumed that a target object 504 is observed in the field of view of the driver at a position of a kilometrage X1 (503), and it is recommended to switch the driving operation with reference to the target object 504. X1 (503) is recorded as the recommended driving operation switching point. When the forward scene image of X1 is displayed, the target object 504 is not displayed on the display unit because the angle of view of the camera is narrow. Therefore, the user may misunderstand to switch the driving operation by referring to a wrong target object 505. A distance |X2 - X1| to a kilometrage X2 (506) in which the target object 504 is within the narrow angle of view of the camera and an appearance of the target object 504 is equivalent to that in the field of view of the human is an absolute value of an offset value 507. In the case of FIG. 6, the target object 504 does not fall within the angle of view unless the image is an image of a point that is moved backward in a direction opposite to the traveling direction. In this case, the offset value is set to a negative value.

FIG. 7 illustrates a case in which an angle of view 601 of a camera used to record a forward scene in advance is wider than a field of view 602 of a human. In this case, at a kilometrage X3 (603), a target object 604 at the driving operation switching point is within the angle of view, but the target object 604 is seen in a distant position in terms of appearance. Therefore, the driver may erroneously learn that the driving operation should be switched at the time when the target object 604 is seen in the distant position. In this case, a distance |X4 - X3| to a kilometrage X4 (605) in which the target object 604 is moved in the traveling direction such that the appearance of the target object 604 is close to that seen by the human is an absolute value of an offset value 606. The offset value is set to a positive value.

In the case of FIG. 7, a portion of the forward scene image of X3 can be cut out and displayed in an enlarged manner such that the appearance of the target object 604 is equivalent to that in the field of view of the human, but the image is rough. As described above, if the forward scene image of X4 which is moved in the traveling direction such that the appearance of the target object 604 is close to that seen by the human is displayed, the image is not rough.

The offset value may be geometrically calculated from the angle of view of the camera and a view angle of the human, or as described above, an optimum value at which the forward scenery image and the field of view of the driver appear similar may be obtained in advance through experiments on the driver, or the offset value may be adjustable such that the user can adjust the offset value while viewing the image such that a desired appearance of the image is obtained.

It is desirable to acquire a forward scene image using a camera having a view angle equivalent to a view angle of a human for the driving assistance device, but there is a problem that a cost for acquiring an image is additionally incurred due to introduction of the device. By using a technique of adjusting an appearance of a ground target object by an offset value, it is possible to utilize forward scene images already held by a railroad company for purposes of forward monitoring and railroad line monitoring.

Next, a method of setting the driving operation switching point recorded in the driving operation recording unit 104 will be described. In the present embodiment, a notch operation is targeted as a driving operation. The notch has positive, negative, and zero values. The positive value (power running notch) represents a state in which an accelerator is depressed in a case of an automobile, and a negative value (brake notch) represents a state in which a brake is depressed. When the value of the notch is zero, the state is the same as that of automobile coasting (a state in which neither the brake nor the accelerator is depressed). In general, the power running notch has a value of 1 to 5, and the brake notch has a value of -1 to -8. In a case of transition from a stopped state to an accelerated state, the notch does not instantaneously change from 0 to 5, but often passes through values such as 2 and 4. Therefore, when the driving operation switching point is simply extracted by using only a change in the numerical value of the notch as a trigger, a fairly large number of driving operation switching points are set.

What is desired to be extracted as the driving operation switching point is a point at which the driving operation is largely switched, for example, from power running to coasting and from coasting to braking. Therefore, only the point at which the notch changes from positive to zero and from zero to negative is extracted as the switching point of the driving operation.

A train has operation modes such as a constant-speed operation in which a constant speed is maintained and a limited-speed operation. In a case of transiting to these operation modes, it is common to press a dedicated switch. Since transition from the power running to the constant-speed operation is a large driving operation switching point, a point at which such a dedicated switch for switching to such a driving mode is handled is also extracted as the switching point of the driving operation.

In the driving operation recording unit 104, any driving data can be recorded according to the purpose of the learner. For example, in a case of learning the driving operations of an instructor, a run curve or a driving operation switching point when the instructor drove in the past is used. For example, in the case of learning an energy-saving operation, an energy-saving operation pattern in which power consumption is minimized may be created by a mathematical optimization technique, and a run curve or a driving operation switching point corresponding to the energy-saving operation pattern may be used. In addition, in a case of desiring to review the past driving operations of the learner himself/herself, a run curve or a driving operation switching point when the learner himself/herself drove in the past is used. In short, as long as the data of the run curve or the driving operation switching point of the driving operation to be learned by the learner is recorded, any origin of the data may be used. The driving operation switching point can also be extracted from the run curve. GPS data during driving may be recorded, and a run curve may be obtained from the GPS data. A notch value acquired from an on-vehicle device may be recorded.

If a point at which the instructor notices an excellent driving operation, a poor driving operation, or the like is recorded when the learner drives, and the point can be displayed when the learner and the instructor review the driving operation together, the instructor can explain the excellent driving operation, the poor driving operation, or the like. A comment accompanying the point may be recorded and displayed.

The driving data recorded in the driving operation recording unit 104 may be various driving data depending on the purpose of the learner. Therefore, it is not realistic to record all driving data in the driving assistance device. In this case, the driving data may be recorded in a server installed at any location, and when the learner selects desired operation data, the selected operation data may be acquired from the server.

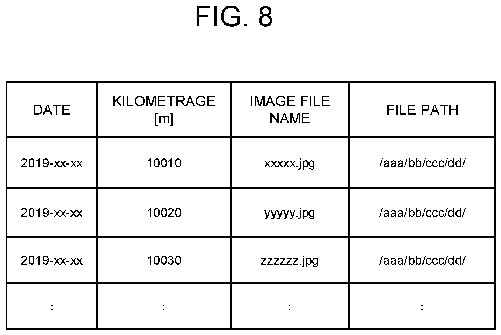

FIG. 8 illustrates an example of a recording format of a forward scene image recorded by the forward scene recording unit 106. A date when an image is acquired, a kilometrage, an image file name of a forward scene at each kilometrage, and a storage location (file path) of an image file are described. Image data of forward scenes recorded in the above recording format exists for each train operation group (train number) or the like. The data format may be other than that shown in FIG. 8, and for example, a latitude and a longitude may be used as position data instead of the kilometrage, and the storage location of the data may be searched for by the file name without describing the file path. In short, as long as the forward scene image at the position to be displayed can be uniquely acquired, any storage method and search method of the target image may be used.

A forward scene image may be recorded in the forward scene recording unit for each external environment (daytime, nighttime, rain, fog, or the like), an external environment condition of learning target data may be predicted from an operation time of a learning target or a weather forecast, and a forward scene image recorded in the forward scene recording unit having the external environment condition closest to the predicted external environment may be used for display of the display unit. In this way, it is possible to learn the driving operation switching point with a sense of presence.

The forward scene images recorded in the forward scene recording unit 106 may be forward scene images of various routes depending on the route to be learned by the learner. Therefore, it is not realistic to record the forward scene images of all the routes in the driving assistance device. In this case, the forward scene images may be recorded in a server installed in any location, and when the learner selects a route to be learned, the forward scene image of the selected route may be acquired from the server. Since the image data generally has a large capacity, in this way, it is possible to reduce a capacity of a storage of the driving assistance device. The map recorded in the map recording unit 105 may also be acquired from the server.

According to the embodiment described above, it is possible for the driver to learn the point at which the driving operation is switched based on a scene visually recognized in forward in the actual driving. A result of the learning can be easily associated with an actual route, and the result of the learning can be reflected in the actual driving.

Although the embodiment of the invention is described above, the invention is not limited to the embodiment described above, and various modifications can be made without departing from the scope of the invention.

For example, instead of the configuration in which the driving assistance device includes the display unit and the operation unit, the driving assistance device may be connectable to a display device and an operation device.

The processing in the processing unit can also be expressed as a processing method of the driving assistance device, and can also be expressed as a program for causing a computer to execute the processing.

Reference Signs List

101   driving assistance device
102   display unit
103   operation unit
104   driving operation recording unit
105   map recording unit
106   forward scene recording unit
107   processing unit


**Claims**

1.   A driving assistance device comprising:

a display unit;
an operation unit configured to designate an item for specifying an image of a forward scene to be displayed on the display unit;
a driving operation recording unit configured to record a driving operation;
a map recording unit configured to record a map around a railroad line;
a forward scene recording unit configured to record image data of the forward scene and position data at which the forward scene is imaged; and

a processing unit, wherein

the processing unit includes

a first determination unit configured to determine driving data to be displayed on the display unit,

a first display control unit configured to display on the display unit a driving operation and a map around a railroad line in the determined driving data,

a second determination unit configured to determine a position on the railroad line for specifying the image of the forward scene to be displayed on the display unit, and

a second display control unit configured to display on the display unit the image of the forward scene at the determined position on the railroad line.

2. The driving assistance device according to claim 1, wherein
a driving operation in first driving data and a driving operation in second driving data are displayed.

3. The driving assistance device according to claim 1, wherein

as a driving operation, a driving operation switching point is displayed on the map around the railroad line, and
an image of a forward scene at the driving operation switching point designated by the operation unit is displayed.

4. The driving assistance device according to claim 3, wherein
the driving operation switching point is a switching point among power running, coasting, and braking.

5. The driving assistance device according to claim 1, wherein

as a driving operation, a run curve is displayed, and
an image of a forward scene at a position on the run curve designated by the operation unit is displayed.

6. The driving assistance device according to claim 1, wherein
an image of a forward scene at a position on the railroad line moved by a predetermined distance with respect to the position on the railroad line designated by the operation unit is displayed.

7. A driving assistance device connectable to a display device and an operation device configured to designate an item for specifying an image of a forward scene to be displayed on the display device, the driving assistance device comprising:

a driving operation recording unit configured to record a driving operation;
a map recording unit configured to record a map around a railroad line;
a forward scene recording unit configured to record image data of a forward scene and position data at which the forward scene is imaged; and
a processing unit, wherein
the processing unit includes
a first determination unit configured to determine driving data to be displayed on the display device,
a first display control unit configured to display on the display device a driving operation and a map around a railroad line in the determined driving data,
a second determination unit configured to determine a position on the railroad line for specifying the image of the forward scene to be displayed on the display device, and
a second display control unit configured to display on the display device the image of the forward scene at the determined position on the railroad line.

8. A processing method of a driving assistance device, the driving assistance device including

a display unit,
an operation unit configured to designate an item for specifying an image of a forward scene to be displayed on the display unit,
a driving operation recording unit configured to record a driving operation,
a map recording unit configured to record a map around a railroad line,
a forward scene recording unit configured to record image data of a forward scene and position data at which the forward scene is imaged, and

a processing unit,
the processing method of the driving assistance device comprising:

determining driving data to be displayed on the display unit;
displaying on the display unit a driving operation and a map around a railroad line in the determined driving data;
determining a position on the railroad line for specifying the image of the forward scene to be displayed on the display unit; and
displaying on the display unit the image of the forward scene at the determined position on the railroad line.

9. The processing method of the driving assistance device according to claim 8, wherein
a driving operation in first driving data and a driving operation in second driving data are displayed.

10. The processing method of the driving assistance device according to claim 8, wherein

as a driving operation, a driving operation switching point is displayed on the map around the railroad line, and
an image of a forward scene at the driving operation switching point designated by the operation unit is displayed.

11. The processing method of the driving assistance device according to claim 10, wherein
the driving operation switching point is a switching point among power running, coasting, and braking.

12. The processing method of the driving assistance device according to claim 8, wherein

as a driving operation, a run curve is displayed, and
an image of a forward scene at a position on the run curve designated by the operation unit is displayed.

13. The processing method of the driving assistance device according to claim 8, wherein
an image of a forward scene at a position on the railroad line moved by a predetermined distance with respect to the position on the railroad line designated by the operation unit is displayed.

14. A processing method of a driving assistance device, the driving assistance device being connectable to a display device and an operation device configured to designate an item for specifying an image of a forward scene to be displayed on the display device, the driving assistance device including

a driving operation recording unit configured to record a driving operation,
a map recording unit configured to record a map around a railroad line,
a forward scene recording unit configured to record image data of a forward scene and position data at which the forward scene is imaged, and
a processing unit,
the processing method of the driving assistance device comprising:

determining driving data to be displayed on the display device;
displaying on the display device a driving operation and a map around a railroad line in the determined driving data;
determining a position on the railroad line for specifying the image of the forward scene to be displayed on the display device; and
displaying on the display device the image of the forward scene at the determined position on the railroad line.

15. A program implemented by a computer, the computer including

a display unit,
an operation unit configured to designate an item for specifying an image of a forward scene to be displayed on the display unit,
a memory unit configured to record a driving operation, a map around a railroad line, image data of the forward scene, and position data at which the forward scene is imaged, and
a processor,
the program causing the computer to execute:

determining driving data to be displayed on the display unit;
displaying on the display unit to display a driving operation and a map around a railroad line in the determined driving data;
determining a position on the railroad line for specifying the image of the forward scene to be displayed on the display unit; and
displaying on the display unit the image of the forward scene at the determined position on the railroad line.

# FIG. 1

# FIG. 2

TIME: xxx    SPEED: xx km/h
KLOMETRAGE: xx km
DRIVING OPERATION: POWER RUNNING → COASTING

STATION

# FIG. 3

# FIG. 4

```
        ┌──────────┐
        │  Start   │
        └────┬─────┘
   ┌─────────┴─────────┐
   │                   │ ⟿ 401
   └─────────┬─────────┘
   ┌─────────┴─────────┐
   │                   │ ⟿ 402
   └─────────┬─────────┘
   ┌─────────┴─────────┐
   │                   │ ⟿ 403
   └─────────┬─────────┘
   ┌─────────┴─────────┐
   │                   │ ⟿ 404
   └─────────┬─────────┘
   ┌─────────┴─────────┐
   │                   │ ⟿ 405
   └─────────┬─────────┘
        ┌────┴─────┐
        │   End    │
        └──────────┘
```

# FIG. 5

```
        ┌─────────────┐
        │    Start     │
        └──────┬──────┘
               │
   ┌───────────┴───────────┐
   │                       │  ⟋ 401
   └───────────┬───────────┘
               │
   ┌───────────┴───────────┐
   │                       │  ⟋ 402a
   └───────────┬───────────┘
               │
   ┌───────────┴───────────┐
   │                       │  ⟋ 403a
   └───────────┬───────────┘
               │
   ┌───────────┴───────────┐
   │                       │  ⟋ 404a
   └───────────┬───────────┘
               │
   ┌───────────┴───────────┐
   │                       │  ⟋ 405a
   └───────────┬───────────┘
               │
        ┌──────┴──────┐
        │     End     │
        └─────────────┘
```

# FIG. 6

501

505

502

504

X1 503

507

501

X2 506

# FIG. 7

# FIG. 8

| DATE | KILOMETRAGE [m] | IMAGE FILE NAME | FILE PATH |
|---|---|---|---|
| 2019-xx-xx | 10010 | xxxxx.jpg | /aaa/bb/ccc/dd/ |
| 2019-xx-xx | 10020 | yyyyy.jpg | /aaa/bb/ccc/dd/ |
| 2019-xx-xx | 10030 | zzzzzz.jpg | /aaa/bb/ccc/dd/ |
| : | : | : | : |

**INTERNATIONAL SEARCH REPORT**

| International application No. |
| --- |
| PCT/JP2021/015268 |

A.  CLASSIFICATION OF SUBJECT MATTER
B61L 25/02(2006.01)i; B61L 27/00(2006.01)i; G09B 9/04(2006.01)i; G09B
19/16(2006.01)i; G09B 29/00(2006.01)i; G09B 29/10(2006.01)i
FI:     B61L27/00 G; B61L25/02 Z; G09B19/16; G09B9/04 B; G09B29/00 A;
        G09B29/10 A
According to International Patent Classification (IPC) or to both national classification and IPC

B.  FIELDS SEARCHED

Minimum documentation searched (classification system followed by classification symbols)
B61L25/02; B61L27/00; G09B9/04; G09B19/16; G09B29/00; G09B29/10

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2015-182684 A (HITACHI, LTD.) 22 October 2015 (2015-10-22) paragraphs [0015]–[0266], fig. 1, 4, 7-17 | 1–15 |
| Y | JP 2013-32949 A (AISIN AW CO., LTD.) 14 February 2013 (2013-02-14) paragraphs [0022]–[0061], fig. 1, 3, 5, 8, 18 | 1–15 |
| A | JP 2017-3929 A (EAST JAPAN RAILWAY COMPANY) 05 January 2017 (2017-01-05) entire text, all drawings | 1–15 |

☐  Further documents are listed in the continuation of Box C.       ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 June 2021 (15.06.2021) | 29 June 2021 (29.06.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/015268

| Patent Documents referred in the Report | Publication Date | Patent Family | Publication Date |
|---|---|---|---|
| JP 2015-182684 A | 22 Oct. 2015 | (Family: none) | |
| JP 2013-32949 A | 14 Feb. 2013 | (Family: none) | |
| JP 2017-3929 A | 05 Jan. 2017 | (Family: none) | |

Form PCT/ISA/210 (patent family annex) (January 2015)

**EP 4 140 853 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000338861 A